# EUROPÄISCHE PATENTSCHRIFT

(11) **EP 1 147 445 B1**
(45) Veröffentlichungstag und Bekanntmachung des Hinweises auf die Patenterteilung: **23.10.2002**
(21) Anmeldenummer: 99965382.7
(22) Anmeldetag: 01.12.1999
(51) Int. Cl.: G02B 6/44

(54) **VORRICHTUNG UND VERFAHREN ZUR STEUERUNG DER FELDSTÄRKE IM BEREICH EINER MASTBEFESTIGUNG FÜR DIELEKTRISCHE KABEL**
DEVICE AND METHOD FOR CONTROLLING THE FIELD INTENSITY IN THE AREA OF A POLE FIXTURE FOR DIELECTRIC CABLES
PROCEDE ET DISPOSITIF POUR PILOTER L'INTENSITE DE CHAMP DANS LA ZONE DE FIXATION D'UN PYLONE POUR DES CABLES DIELECTRIQUES

(30) Priorität: 14.12.1998 DE 19857676
(43) Veröffentlichungstag der Anmeldung: 24.10.2001
(73) Patentinhaber: CCS Technology, Inc., Wilmington, DE 19803 (US)
(72) Erfinder: ENGEL, Reinhard, D-96271 Grub am Forst (DE); HÖLLER, Markus, D-84405 Dorfen (DE); MAYR, Ernst, D-82319 Starnberg (DE)
(74) Vertreter: Sturm, Christoph, Dipl.-Ing.
(86) Internationale Anmeldenummer: DE9903805
(87) Internationale Veröffentlichungsnummer: WO00036449

(56) Entgegenhaltungen:
- DE-A- 3 506 883
- GB-A- 2 234 830
- US-A- 5 758 005
- PATENT ABSTRACTS OF JAPAN vol. 011, no. 210 (M-604), 8. Juli 1987 (1987-07-08) & JP 62 027134 A (FURUKAWA ELECTRIC CO LTD:THE), 5. Februar 1987 (1987-02-05)
- DATABASE WPI Section Ch, Week 197444 Derwent Publications Ltd., London, GB; Class A85, AN 1974-76630V XP002134384 & JP 49 036756 B (DAINICHI NIPPON CABLES LTD), 3. Oktober 1974 (1974-10-03)

## Beschreibung

Die Erfindung betrifft eine Vorrichtung zur Steuerung der Feldstärke im Bereich einer Mastbefestigung für dielektrische Kabel mit einem Kabelmantel in Hochspannungsanlagen.

Selbsttragende metallfreie, sogenannte dielektrische Lichtwellenleiter-Luftkabel eignen sich besonders zum Einbau in bestehender. Hochspannungsanlagen bzw. Hochspannungstrassen. Sie sind elektrisch gut isoliert und lassen sich deshalb auch während des Betriebs der Hochspannungstrasse mit relativ einfachen Schutzmaßnahmen für die Monteure installieren. Außerdem belasten sie wegen ihres geringen Gewichts die Hochspannungsmaste weniger als metallarmierte Lichtwellenleiter-Luftkabel. In der Regel werden diese dielektrischen Lichtwellenleiter-Luftkabel im Freiraum zwischen den Phasenseilen und der Erde aufgespannt, so daß sie sich in einem Bereich mit hohem elektrischen Potential befinden können. Durch die kapazitive Kupplung mit Hochspannungsleitungen wird der Kabelmantel aufgeladen. Zum Schutz von Personen, die sich im Mastbereich aufhalten, müssen die Abspannstellen dieser Lichtwellenleiter-Luftkabel geerdet werden. Die Abspannung und Befestigung dieser Lichtwellenleiter-Luftkabel erfolgt üblicherweise mit metallischen Mastbefestigungen wie zum Beispiel mit Abspannspiralen, die elektrisch leitend am Mast befestigt werden. Damit kommt es zu einem Spannungsabfall entlang des Kabelmantels, wobei hohe Feldstärken auftreten, die besonders am Übergang zur geerdeten Mastbefestigung in Erscheinung treten. Diese hohen Feldstärken rufen elektrische Entladungen an der Kabelmanteloberfläche sowie Kriechströme hervor, durch die die Lebensdauer des Mantelmaterials infolge von Abtragungen und Verbrennungen erheblich verkürzt wird.

Es ist versucht worden, zur Abflachung der Feldstärkespitzen halbleitende Schichten in das Lichtwellenleiter-Luftkabel einzubauen, doch besteht dann zusätzlich die Gefahr von Durchschlägen durch den Mantel zwischen der spannungsführenden halbleitenden Schicht und der geerdeten Mastbefestigung. Die Durchschläge häufen sich am Ende der Mastbefestigung, da dort die Spannung über dem Kabelmantel ihren Höchstwert erreicht, wobei die elektrische Feldstärke an den relativ scharfkantigen Enden der Mastbefestigung, insbesondere der Abspannspirale, erhöht wird. Um einen besonders guten Halt der Mastbefestigungen auf dem Kabelmantel zu erreichen, wird auf der Innenseite der Mastbefestigung ein Belag aus scharfkantigem Sand aufgebracht. Die Sandspitzen dringen dabei in den Kabelmantel ein, wodurch zusätzlich eine punktuelle Erhöhung der Feldstärke eintritt. Dieser Effekt führt dann unter Umständen zusätzlich unterhalb der Mastbefestigung zu Durchschlägen und zu einem vorzeitigen Funktionsverlust des Kabelmantels.

Aus der europäischen Patentschrift EP 0 695 431 B1 ist ein optisches Kabel bekannt, das eine Anordnung von länglichen leitenden Elementen umfaßt. Diese erstrecken sich jeweils entlang eines Teils des Kabels, wobei sich benachbarte leitende Elemente axial miteinander überlappen, um einen zusammengesetzten leitenden Weg zu bilden, der sich entlang des Kabels erstreckt und der aufgrund des Abstandes der leitenden Elemente auf dem Umfang unterbrochen wird, wenn das Kabel trocken ist. Wenn die Oberfläche des Kabels jedoch naß ist, werden die benachbarten leitenden Elemente miteinander widerstandsgekoppelt und bilden einen zusammenhängenden elektrisch leitenden Weg entlang des Kabels. Auf diese Weise wird das optische Kabel an den Mastbefestigungen im trockenen wie im nassen Zustand geerdet.

Aus der Patentschrift GB 2 234 830 A ist eine Vorrichtung nach dem Oberbegriff des Anspruchs 1 bekannt.

Es sind jedoch auch leitende Trichter, Scheiben oder Toroide bekannt, die am Ende der Mastbefestigung angebracht werden.

Aufgabe der vorliegenden Erfindung ist, einen weichen, über einige Meter Länge verteilten Erdungsübergang für dielektrische Kabel im Bereich einer Mastbefestigung mit relativ einfachen Schutzmaßnahmen herzustellen. Die gestellte Aufgabe wird nun mit einer Vorrichtung der eingangs erläuterten Art durch die im kennzeichnenden Teil des Anspruchs 1 definierten Merkmale gelöst.

Weiterhin ist Aufgabe der Erfindung, ein Verfahren zur Montage einer Vorrichtung zur Steuerung der Feldstärke im Bereich einer Mastbefestigung zu entwickeln. Diese gestellte Aufgabe wird nach dem Merkmal des Patentanspruchs 12 gelöst.

Mit Hilfe der Vorrichtung gemäß der Erfindung können die anstehenden Probleme bezüglich des Feldstärkeabbaus im Bereich einer Mastbefestigung für dielektrische Kabel gelöst werden. So ergibt sich eine äußerst sichere Erdung, die auch während der Montage der Hülse gemäß der Erfindung gegeben ist, so daß für den installierenden Monteur auch im eingeschalteten Zustand der Hochspannungsanlage der Schutzaufwand wesentlich geringer gestaltet werden kann. So verbleibt der Monteur während der Montage im spannungsfreien Mastbereich. Außerdem werden Manteldurchschläge zwischen der gesandeten Mastbefestigung, besonders in der Form einer gesandeten Abfangspirale und einer Halbleiterfeldsteuerschicht im Kabel durch Ableitung der aufgebauten Spannung außerhalb der Abspannstelle verhindert. Die Glättung der Feldstärkespitze erfolgt dabei längs des Kabels unmittelbar vor der Mastbefestigung bzw. Abspannspirale bzw. einer Unterspirale. Unterspiralen werden bei größeren Spannfeldern von > 50 m zusätzlich zur Abfangung der größeren Zugkräfte (> 3500 N) eingesetzt. Die hierfür benötigten Vorrichtungen zur Steuerung der Feldstärke und das Verfahren zur Montage entsprechen den Gegebenheiten wie bei einer normalen Abspannspirale.

Die Montage der erfindungsgemäßen Hülse ist denkbar einfach; denn durch die rückstellende Eigenschaft der geschlitzten Hülse erfolgt sofort eine Selbstfixierung, so daß Kleber oder Halteelemente außerhalb der geerdeten Mastbefestigung bzw. Abspannspirale nicht erforderlich sind. Es genügt eine einfache mechanische Sicherung in Mastnähe auf der geerdeten Mastbefestigung bzw. Abspannspirale mit Hilfe einer Kabelschelle oder eines Kabelbinders. Weiterhin ist ein Rundumschutz an der Übergangsstelle zwischen dem Kabel und der Mastbefestigung bzw. Abspannspirale im Bereich der höchsten mechanischen Beanspruchung vor Verschmutzung und Verwitterung gesichert. Die halbleitende Schicht und damit die Feldsteuerung im Inneren der Hülse ist geschützt, so daß der geschützte Widerstandsbelag eine konstante und verschmutzungsbeständige Feldsteuerung gewährleistet. Schließlich erfolgt durch die erhöhte Betriebstemperatur infolge der elektrischen abgegebenen Verlustleistung ein schnelles Abtrocknen im kritischen Bereich.

Zusammenfassend sind leichte Montierbarkeit vom sicheren Mast aus, die Feldsteuerung im kritischen Befestigungsbereich, der Verwitterungs- und Verschmutzungsschutz für die Übergangsstelle zwischen Kabel und Mastbefestigung, die einfache Selbstfixierung der Hülse und schließlich eine kostengünstige Herstellung in Endlostechnik besonders hervorzuheben.

Die Erfindung wird nun anhand von drei Figuren näher erläutert.
- Figur 1: zeigt die geschlitzte Hülse.
- Figur 2: zeigt den Montagevorgang zum Aufsetzen der Hülse.
- Figur 3: zeigt den endgültigen Zustand.

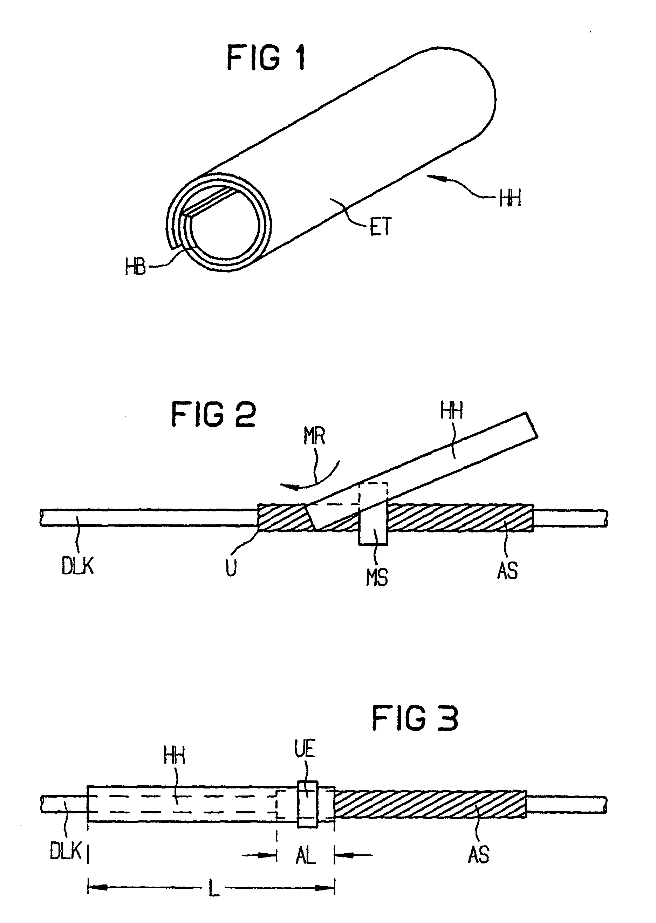

In Figur 1 ist die Hülse HH gemäß der Erfindung dargestellt, die längsgeschlitzt ist. Die Längskanten der Hülse HH überdecken sich dabei längsseitig und aufgrund der rückstellenden Eigenschaften ist die Hülse HH längsseitig jeweils geschlossen. Die Hülse HH besteht aus einer Trägerschicht mit den rückstellenden Eigenschaften, zum Beispiel aus einem dauerelastischen Kunststoffmaterial wie zum Beispiel Polybutylenterephthalat (PBT), Polyvinylchlorid (PVC), Acrylnitrilbutadienstyrol (ABS). Auf der Innenwandung dieser Trägerschicht ET ist eine elektrisch halbleitende Schicht HB aufgebracht, die einen elektrischen Widerstand von 5 bis 200 MΩ/m aufweist. Die thermische Belastbarkeit der Hülse insgesamt beträgt > 100 W/m.

In Figur 2 ist eine Abspannstelle für ein dielektrisches Kabel DLK dargestellt, wobei als Mastbefestigung eine Abfangspirale AS angedeutet ist. Mit der Abfangspirale AS wird das Kabel DLK gefaßt, wobei die Abfangspirale AS aus leitendem Material besteht und am Mast geerdet ist. Auf der linken Seite der Figur ist das Kabel DLK gezeigt, das zum Abspannfeld der Hochspannungsleitung führt und auf dessen Kabelmantel sich die entsprechende Feldstärke aufbaut. Der kritische Punkt liegt dabei an der Übergangsstelle U zwischen dem vom Abspannfeld aus zugeführten Kabel DLK und der Mastbefestigung AS. Die Montage der Vorrichtung zur Steuerung der Feldstärke gemäß der Erfindung in Form der geschlitzten Hülse HH erfolgt von der sicher geerdeten Mastseite aus. Für die Montage wird ein sogenannter Montageschuh MS auf die Mastbefestigung - z.B. in Form einer Abspannspirale AS - aufgesetzt, mit deren Hilfe die Hülse HH so weit aufgespreizt wird, daß sie zunächst über die hier angedeutete Abspannspirale AS und dann weiterhin in Montagerichtung MR auf das dielektrische Kabel DLK aufgeschoben werden kann. Dabei ist bei diesem Montagevorgang immer eine einwandfreie Erdung gesichert, da der metallische Montageschuh MS über die metallische Abspannspirale AS mit dem geerdeten Mast leitend verbunden ist.

Figur 3 zeigt schließlich den Endzustand, bei dem die Hülse HH in der für den Abbau der Feldstärke nötigen Länge L auf dem Kabel DLK und der Mastbefestigung AS aufliegt. Die erforderliche Länge L beträgt 1 bis 5 m, wobei die Auflagelänge AL auf der Mastbefestigung AS > 20 cm beträgt. Die Hülse HH liegt im gefährdeten Bereich dicht auf dem Kabelmantel des Kabels DLK auf, so daß über die halbleitende Schicht der Hülse HH der Feldstärkeabbau bis zur Mastbefestigung AS erfolgen kann. Die mechanische Befestigung der Hülse HH wird mit einem umfassenden Element UE, zum Beispiel einem Kabelbinder oder einer Kabelschelle vorgenommen.

## Patentansprüche

1. Vorrichtung zur Steuerung der Feldstärke im Bereich einer Mastbefestigung für dielektrische Kabel in Hochspannungsanlagen, mit einem dielektrischen Kabel (DLK), das einen elektrisch isolierenden Kabelmantel aufweist, einer geerdeten Mastbefestigung (AS), die an dem Kabelmantel angreift, und einer längsgeteilten Hülse (HH), die an der Übergangsstelle (U) zwischen dem Kabel (DLK) und der Mastbefestigung (AS) angeordnet ist und das Kabel (DLK) sowie die Mastbefestigung (AS) in einer vorbestimmten Länge (L) umschließt,
**dadurch gekennzeichnet, daß** die Hülse (HH) aus einer elastische Eigenschaften aufweisenden Trägerschicht (ET) besteht, auf deren Innenfläche eine elektrisch halbleitende Schicht (HB) zum Abbau einer sich auf dem Kabelmantel des Kabels (DLK) einstellenden Feldstärke aufgebracht ist, wobei sich aufgrund der elastischen Eigenschaften der Trägerschicht (ET) die Längskanten der Hülse (HH) längsseiteig überdecken und die Hülse (HH) eng an der Übergangsstelle (U) anliegt.

2. Vorrichtung nach Anspruch 1,
**dadurch gekennzeichnet, daß** die Hülse (HH) zur Aufnahme des Kabels (DLK) und der Mastbefestigung (AS) vorzugsweise mit einer aufsetzbaren Spreizvorrichtung (MS) der Länge nach aufspreizbar ist.

3. Vorrichtung nach Anspruch 1 oder 2,
**dadurch gekennzeichnet, daß** die halbleitende Schicht (HB) einen elektrischen Widerstand von 5-200 MΩ/m besitzt.

4. Vorrichtung nach einem der Ansprüche 1 bis 3,
**dadurch gekennzeichnet, daß** die Hülse (HH), vorzugsweise die halbleitende Schicht (HB), eine thermische Belastbarkeit von > 100 W/m aufweist.

5. Vorrichtung nach einem der Ansprüche 1 bis 4,
**dadurch gekennzeichnet, daß** die Hülse (HH) nach der Montage mit einem umfassenden Element (UE), vorzugsweise einem Kabelbinder oder einer Kabelschelle, gesichert ist.

6. Vorrichtung nach einem der Ansprüche 1 bis 5,
**dadurch gekennzeichnet, daß** die Trägerschicht (ET) aus dauerelastischem, wetterbeständigem Kunststoffmaterial, vorzugsweise aus Polybutylenterephthalat (PBT), Polyvinylchlorid (PVC) oder Acrylnitrilbutadienstyrol (ABS), besteht.

7. Vorrichtung nach einem der Ansprüche 1 bis 6,
**dadurch gekennzeichnet, daß** die Länge (L) der Hülse (HH) 1 bis 5 m beträgt, wobei davon eine Auflagelange (AL) auf der Mastbefestigung (AS) > 20 cm beträgt.

8. Vorrichtung nach einem der Ansprüche 1 bis 7,
**dadurch gekennzeichnet, daß** die Mastbefestigung (AS) eine Abspannspirale ist, die das Kabel (DLK) der Länge nach schraubenförmig umfaßt.

9. Vorrichtung nach einem der Ansprüche 1 bis 8,
**dadurch gekennzeichnet, daß** die Innenseite der Mastbefestigung (AS) aufgerauht oder besandet ist.

10. Verfahren zur Montage der geschlitzten Hülse (HH) einer Vorrichtung nach einem der Ansprüche 1 bis 9, umfassend folgende Verfahrensschritte:
a) Eine Spreizvorrichtung (MS) wird auf der Mastbefestigung (AS) aufgesetzt;
b) durch Führung der geschlitzten Hülse (HH) über die Spreizvorrichtung (MS) wird eine Aufweitung der Hülse (HH) vorgenommen;
c) die Hülse (HH) wird von der spannungsfreien, geerdeten Mastseite einer Hochspannungsanlage aus über die Übergangsstelle (U) hinweg in Richtung des in ein Abspannfeld führenden Kabels (DLK) zur endgültigen Montagelage soweit vorgeschoben, bis eine Auflagefläche (AL) auf der Mastbefestigung (AS) von > 20 cm erreicht ist, wobei die Hülse (HH) durch ihre elastische Eigenschaft fixiert wird, und
d) die Spreizvorrichtung (MS) wird wieder entfernt.

## Claims

1. Device for controlling the field intensity in the area of a pole fixture for dielectric cables in high-voltage systems, with a dielectric cable (DLK), which has an electrically insulating cable covering, an earthed pole fixture (AS), which acts on the cable covering, and a longitudinally divided sleeve (HH), which is arranged at the transition (U) between the cable (DLK) and the pole fixture (AS) and encloses the cable (DLK) and the pole fixture (AS) over a predetermined length (L),
**characterized in that** the sleeve (HH) comprises a support layer (ET) which has elastic properties and on the inner face of which an electrically semiconducting layer (HB) has been applied to reduce a field intensity occurring on the cable covering of the cable (DLK), the longitudinal edges of the sleeve (HH) covering one another longitudinally and the sleeve (HH) resting snugly against the transition (U) on account of the elastic properties of the support layer (ET).

2. Device according to Claim 1, **characterized in that** the sleeve (HH) can be spread open lengthwise for receiving the cable (DLK) and the pole fixture (AS), preferably by a spreading device (MS) which can be placed on it.

3. Device according to Claim 1 or 2, **characterized in that** the semiconducting layer (HB) has an electrical resistance of 5-200 MΩ/m.

4. Device according to one of Claims 1 to 3, **characterized in that** the sleeve (HH), preferably the semiconducting layer (HB), has a heat resistance of > 100 W/m.

5. Device according to one of Claims 1 to 4, **characterized in that** the sleeve (HH) is secured after fitting by an enclosing element (UE), preferably a cable tie or a cable clip.

6. Device according to one of Claims 1 to 5, **characterized in that** the support layer (ET) consists of permanently elastic, weather-resistant plastics material, preferably of polybutylene terephthalate (PBT), polyvinyl chloride (PVC) or acrylonitrile butadiene styrene (ABS).

7. Device according to one of Claims 1 to 6, **characterized in that** the length (L) of the sleeve (HH) is 1 to 5 m, of which a resting length (AL) on the pole fixture (AS) is > 20 cm.

8. Device according to one of Claims 1 to 7, **characterized in that** the pole fixture (AS) is an anchoring coil, which helically encloses the cable (DLK) lengthwise.

9. Device according to one of Claims 1 to 8, **characterized in that** the inner side of the pole fixture (AS) is roughened or sanded.

10. Method of fitting the slit sleeve (HH) of a device according to one of Claims 1 to 9, comprising the following method steps:
a) a spreading device (MS) is placed on the pole fixture (AS);
b) expanding of the sleeve (HH) is performed by guiding the slit sleeve (HH) over the spreading device (MS);
c) the sleeve (HH) is pushed forward from the voltage-free, earthed end of the pole of a high-voltage system over the transition (U) in the direction of the cable (DLK), which leads to an anchoring zone, until a resting surface (AL) on the pole fixture (AS) of > 20 cm is reached to attain the final fitted position, the sleeve (HH) being fixed by its elastic property, and
d) the spreading device (MS) is removed again.

## Revendications

1. Dispositif de réglage de l'intensité de champ dans la zone d'une fixation sur pylône d'un câble diélectrique dans des installations à haute tension, comportant un câble diélectrique (DLK) qui présente une enveloppe de câble isolant électriquement, une fixation sur pylône (AS) mise à la terre qui s'applique sur l'enveloppe du câble, et une gaine (HH) divisée longitudinalement qui est disposée à l'endroit de transition (U) entre le câble (DLK) et la fixation sur pylône (AS) et entoure le câble (DLK) ainsi que la fixation sur pylône (AS) sur une longueur prédéterminée (L), **caractérisé en ce que** la gaine (HH) est constituée d'une couche support (ET) présentant des propriétés élastiques, sur la surface intérieure de laquelle une couche électriquement semi-conductrice (HB) est appliquée afin de réduire une intensité de champ s'établissant sur l'enveloppe de câble du câble (DLK), les bords longitudinaux de la gaine (HH) se recouvrant sur leur côté longitudinal en raison des propriétés élastiques de la couche support (ET) et la gaine (HH) s'appliquant étroitement sur l'endroit de transition (U).

2. Dispositif selon la revendication 1, **caractérisé en ce que** la gaine (HH) peut être écartée longitudinalement pour recevoir le câble (DLK) et la fixation sur pylône (AS) de préférence avec un dispositif d'écartement (MS) pouvant être placé dessus.

3. Dispositif selon la revendication 1 ou 2, **caractérisé en ce que** la couche semi-conductrice (HB) présente une résistance électrique de 5-200 MΩ/m.

4. Dispositif selon l'une quelconque des revendications 1 à 3, **caractérisé en ce que** la gaine (HH), de préférence la couche semi-conductrice (HB) présente une capacité de charge thermique de plus de 100 W/m.

5. Dispositif selon l'une quelconque des revendications 1 à 4, **caractérisé en ce que** la gaine (HH) est fixée après montage avec un élément enserrant (UE), de préférence un dispositif de liaison de câble ou un serre-câble.

6. Dispositif selon l'une quelconque des revendications 1 à 5, **caractérisé en ce que** la couche support (ET) est constituée d'un matériau synthétique résistant aux conditions atmosphériques, à élasticité permanente, de préférence de polybutylènetéréphtalate (PBT), de poly(chlorure de vinyle) (PVC) ou d'un copolymère d'acrylonitrile, de butadiène et de styrène (ABS).

7. Dispositif selon l'une quelconque des revendications 1 à 6, **caractérisé en ce que** la longueur (L) de la gaine (HH) est de 1 à 5 m, une longueur de pose (AL) sur la fixation sur pylône (AS) étant de > 20 cm.

8. Dispositif selon l'une quelconque des revendications 1 à 7, **caractérisé en ce que** la fixation sur pylône (AS) est une spirale d'arrêt qui enserre le câble (DLK) longitudinalement et hélicoïdalement.

9. Dispositif selon l'une quelconque des revendications 1 à 8, **caractérisé en ce que** la face intérieure de la fixation sur pylône (AS) est rendue rugueuse ou sablée.

10. Procédé pour le montage de la gaine fendue (HH) d'un dispositif selon l'une quelconque des revendications 1 à 9, comprenant les étapes de procédé suivantes :
a) un dispositif d'écartement (MS) est placé sur la fixation sur pylône (AS) ;
b) en guidant la gaine fendue (HH) sur le dispositif d'écartement (MS), on procède à l'évasement de la gaine (HH) ;
c) la gaine (HH) est poussée depuis le côté du pylône mis à la terre, exempt de tension d'une installation à haute tension, sur l'endroit de transition (U) en direction du câble (DLK) conduisant dans un champ d'arrêt, vers la position finale de montage suffisamment loin pour qu'une surface de pose (AL) sur la fixation sur pylône (AS) de plus de 20 cm soit atteinte, la gaine (HH) étant fixée par sa propriété élastique, et
d) le dispositif d'écartement (MS) est à nouveau enlevé.
